# FASCICULE DE BREVET EUROPEEN

(11) **EP 3 526 077 B1**
(45) Date de publication et mention de la délivrance du brevet: **01.09.2021**
(21) Numéro de dépôt: 17787507.7
(22) Date de dépôt: 04.10.2017
(51) Int. Cl.: B60N 2/68, B60N 2/30, B60N 2/36

(54) **GOUSSET MULTI POSITIONS POUR ARTICULATION DE SIEGE DE VEHICULE**
MEHRPOSITIONENKNOTENBLECH FÜR EINE FAHRZEUGSITZSCHARNIERANORDNUNG
MULTIPLE-POSITION GUSSET PLATE FOR A VEHICLE SEAT HINGE ASSEMBLY

(30) Priorité: 14.10.2016 FR 1659959
(43) Date de publication de la demande: 21.08.2019
(73) Titulaire: PSA Automobiles SA, 78300 Poissy (FR)
(72) Inventeur: COTTA, Gerald, 78450 Villepreux (FR); REMION, Cyril, 95250 Beauchamp (FR)
(86) Numéro de dépôt international: PCT/FR2017/052725
(87) Numéro de publication internationale: WO 2018/069603

(56) Documents cités:
- DE-A1-102005 043 084
- DE-A1-102012 015 008
- FR-A1- 2 663 889
- FR-A1- 3 006 641

## Description

La présente invention concerne un gousset multi position pour procurer une articulation modulable de dossier de siège de véhicule. L'articulation modulable permet l'obtention d'un plancher plat lorsque le dossier du siège est dans une position horizontale.

Dans l'état de la technique, nous connaissons le document EP0965480 qui décrit une ossature légère pour un dossier de siège arrière de véhicule. Le siège comprend un cadre principal réalisé à partir d'une extrusion d'alliage léger avec une section en I. Les extrémités inférieures de l'ossature sont reliées par une barre de pivotement extrudée. Les supports du gousset de pivotement sont des pièces moulées pour une construction simple. La section en I extrudée est percée de quatre points de fixation à ses extrémités inférieures permettant d'assembler simultanément l'ossature en section I sur les supports et les goussets recevant la tige assurant le pivotement du siège. Les goussets tels que définis sont montés verticalement et enchâssés sur l'âme du I et comportent des points de fixation placés en regard des points de fixation de la section en I et du support. Des rivets ou des boulons engagés dans les points de fixations maintiennent fermement l'assemblage. Ils possèdent des formes spécifiques différentes entre les côtés droit et gauche de l'ossature et arrondis en partie inférieure. Un alésage apte à recevoir la tige d'articulation est centré sur l'arrondi. On comprend que les goussets droit et gauche sont différents et doivent être appairés à chaque assemblage d'ossature de sièges. Ces goussets sont bien adaptés à une ossature en I mais ne le sont pas pour une structure tubulaire. Néanmoins les goussets pour les structures tubulaires ne sont pas standardisés pour s'assembler sur une génératrice tubulaire dans une position verticale. De plus, les goussets ne comportent qu'un alésage pour recevoir une tige d'articulation du dossier. Il n'y a donc aucune possibilité de régler la hauteur du dossier selon le niveau du plancher. En effet, selon le type de véhicule le niveau du plancher varie par rapport au niveau de fixation des armatures de sièges. Ce qui implique de fabriquer des goussets spécifiques afin d'obtenir un plancher parfaitement plan avec la continuité des dossiers des sièges en position rabattue, notamment pour agrandir l'espace de chargement. Les documents DE 10 2012 015008 A1 et FR 2 663 889 A1 divulguent d'autres exemples de l'art antérieur.

Le but de l'invention est donc de proposer des goussets permettant d'articuler le dossier sur une tige de pivotement à différents entraxes aptes à autoriser le réglage d'un dossier rabattu à l'horizontale à différentes hauteurs afin qu'il soit dans le prolongement du plancher du véhicule. Lesdits goussets ont été conçus pour s'adapter indifféremment sur l'angle à droite que sur l'angle à gauche de la structure de dossier de siège. Ces goussets permettant le pivotement du dossier du siège sont standardisés et prévus pour s'adapter aussi bien aux banquettes un tiers qu'aux banquettes deux tiers.

A cet effet, la présente invention a pour objet un gousset d'articulation comprenant les caractéristiques de la revendication 1.

Avantageusement, les ouvertures sont réalisées dans la zone de l'aile possédant des cotés parallèles.

Avantageusement, au moins une aile a une largeur légèrement supérieure à la section de la structure tubulaire.

Selon une variante, les ouvertures de l'aile sont placées à des distances différentes de la base du gousset.

Selon une autre variante, la série d'ouvertures est alignée sur une ligne commune d'une aile.

Selon une autre caractéristique, les ouvertures ont des axes inclinés par rapport à la bordure de l'extrémité des ailes, orthogonale à la base du gousset.

Avantageusement, l'aile comporte au moins une série de deux ouvertures.

L'invention concerne également un dossier de siège de véhicule comportant au moins deux goussets, suivant les caractéristiques susmentionnées.

D'autres caractéristiques et avantages de l'invention apparaîtront clairement à la lecture de la description ci-après, donnée à titre indicatif en référence aux dessins annexés dans lesquels:
- La figure 1 est une vue de face de la structure des dossiers articulés dans des supports de pivots fixés sur le plancher du véhicule suivant l'art antérieur ;
- La figure 2 est une vue de face de la structure des dossiers articulés dans des supports de pivots fixés sur le plancher du véhicule suivant un mode de réalisation ne faisant pas partie de l'invention;
- La figure 3 est une vue de face du gousset apte à être fixé indifféremment sur un coin inférieur de la structure du dossier suivant un mode réalisation ne faisant pas partie de l'invention;
- Les figures 4A-4B sont des vues schématiques de profil d'une configuration de plancher de niveau différents alignés avec le dossier d'un siège au moyen des goussets multi positions, suivant l'invention ;
- La figure 5 est une vue partielle en perspective d'un gousset multi position fixé sur la structure d'un dossier et sur un bras par l'intermédiaire d'une liaison pivot suivant l'invention.

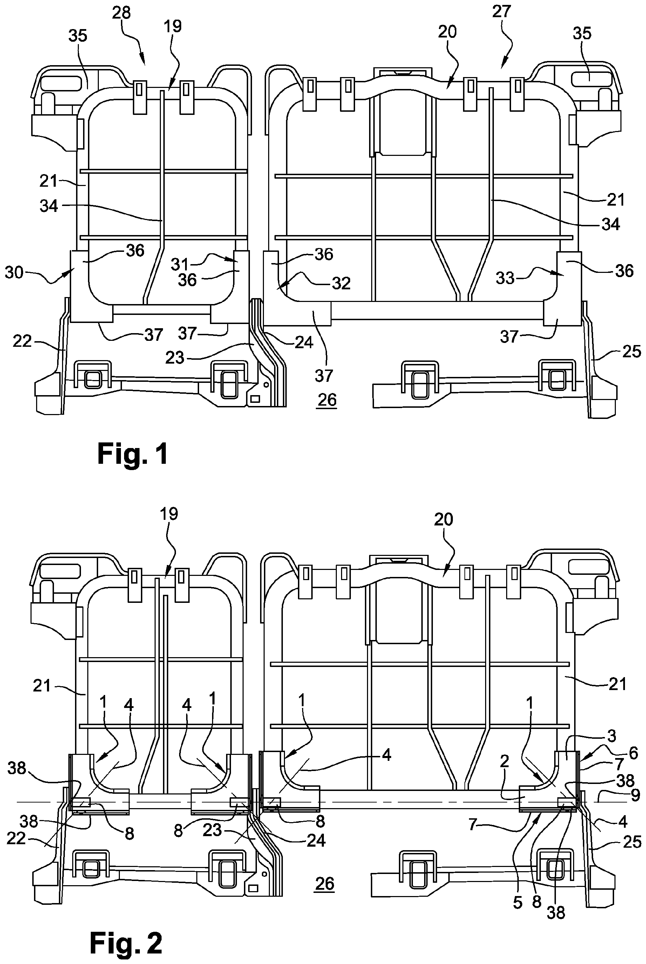

La figure 1 est une vue de face de la structure des dossiers 19, 20 articulés sur des bras 22, 23, 24, 25 comportant des liaisons pivots, fixés sur le plancher 26 du véhicule suivant l'art antérieur. La structure des dossiers 19, 20 concerne plus précisément le rang 2 d'un véhicule. Le véhicule est équipé de sièges 27, 28 de type, deux tiers, un tiers c'est-à-dire qu'un siège comporte deux places 27 et l'autre une place 28, montés de façon contigüe. Les angles inférieurs des structures tubulaires 21 reçoivent des goussets 30, 31, 32, 33 spécifiques destinés à créer des liaisons pivots. La structure des dossiers 19, 20 est identique, ils ne diffèrent que par leur taille. Ils comprennent une structure tubulaire rectangulaire de hauteur identique comportant à l'intérieur de leur cadre un réseau filaire 34. Le réseau filaire 34 est disposé transversalement et verticalement afin de recevoir la matelassure du dossier 19, 20. Des supports 35 aptes à fixer des ceintures de sécurité sont solidarisés dans les angles supérieurs vers l'extérieur des structures tubulaires 21. Des bras 22, 23, 24, 25 comportant à leur extrémité libre des tiges en saillie viennent s'engager dans une ouverture ménagée dans les goussets 30, 31, 32, 33 solidaire de la structure tubulaire des dossiers 19, 20, pour créer une liaison pivot. Les bras 22, 23, 24, 25 sont fixés sur le plancher 26 du véhicule à l'aide de renfort placés parallèlement à la structure tubulaire du dossier 19, 20. Les goussets 30, 31, 32, 33 viennent coiffer et s'ajuster sur le profil des coudes dans les angles inférieurs des structures tubulaires 21 dont ils recouvrent la forme coudée à 90 degrés dans sa totalité. Les goussets 30, 31, 32, 33 sont fixés par tous moyens appropriés notamment par soudage sur la structure tubulaire 21. Les goussets 30, 31, 32, 33 possèdent des ouvertures situés dans le plan de la structure tubulaire 21 lorsque les dossiers 19, 20 sont verticaux. Comme cela est montré sur la figure, les goussets 30, 31, 32, 33 possèdent des formes différentes notamment suivant la longueur de leurs ailes 36, 37 dissymétriques selon leur positionnement sur les structures tubulaires 21 des dossiers 19, 20 de sièges.

La figure 2 est une vue de face de la structure des dossiers 19, 20 articulés dans des supports de pivots fixés sur le plancher 26 du véhicule. Les structures tubulaires 21 des dossiers 19, 20 sont rigoureusement identiques à celle de la figure 1. Les goussets 1 placés dans les angles possèdent des ailes 2, 3 symétriques suivant l'axe médian 4 faisant un angle de 45 degrés par rapport au bord horizontal 5 et au bord vertical 6. Des rebords 7 de formes identiques sont disposés en saillie sur les bords horizontaux 5 et verticaux 6. Une ouverture 38 est ménagée dans les rebords 15, 16 à proximité de l'intersection des bords 5, 6 placés horizontalement et verticalement. L'ouverture 38 placée sur le rebord 15, 16 permet d'engager la tige 8 disposé en saillie radiale à l'extrémité des bras 22, 23, 24, 25 afin de fournir une liaison pivot. Les tiges 8 disposées en saillie sur les bras 22, 23, 24, 25, sont agencées pour s'engager dans les goussets 1 des dossiers 19, 20 sont disposés en vis-à-vis et alignés sur le même axe horizontal 9, à l'identique pour les dossiers 19, 20 des sièges de type, deux tiers, un tiers. Les goussets 1 placés à chacune des extrémités des structures tubulaires 21 sont articulés de façon à positionner indifféremment le dossier 19, 20 verticalement ou horizontalement sur l'assise. On comprend que l'ouverture 38 placée sur le rebord horizontal 5 n'est pas utilisée.

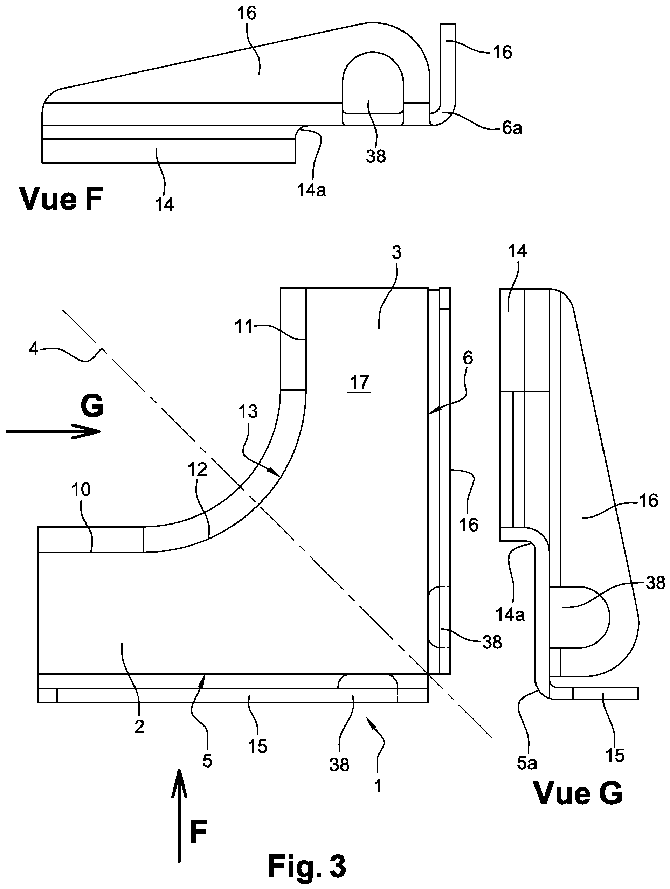

La figure 3 est une vue de face du gousset 1 apte à être fixé indifféremment sur un coin inférieur de la structure du dossier 19, 20, (non visible). Le gousset 1 possède des ailes 2, 3 symétriques suivant l'axe médian 4 passant par l'intersection des bords extérieurs 5, 6 faisant un angle droit. L'axe médian 4 forme donc un angle de 45 degrés par rapport aux bords extérieurs 5, 6. Les bords extérieurs 5, 6 du gousset 1 forment un angle droit, tandis que les bords intérieurs rectiligne 10, 11 sont raccordés par un rayon de courbure 12 formant un bord intérieur 13 continu. Le bord intérieur 13 comporte un rebord interne 14 orienté à angle droit par rapport à la surface 17 et se raccordant par un rayon de courbure 14a sur cette même surface 17. La vue F est une vue suivant la flèche repère F de la figure 3 montrant le rebord 14 de l'extérieur, tandis que la vue G suivant la flèche repère G montre le rebord 14 de l'intérieur. On comprend que ce rebord 14 vient épouser et se caler sur le profil des coudes à angle droit de la tubulure 21 (visible figure 2) des dossiers des sièges. Comme on le voit sur la figure 2 et les vues F et G, les bords extérieurs 5, 6 se prolongent par un arrondi 5a, 6a sur chacun des côtés dans un sens opposé au rebord intérieur 14 continue pour former des rebords extérieur 15, 16. Les rebords extérieurs 15, 16 de formes identiques sont en forme de triangle isocèle dont le côté est situé à proximité de l'intersection des bords extérieurs 5, 6. Le rebord interne 14 orientée à angle droit par rapport à la surface 17 du gousset 1 est opposé au rebord extérieur 15, 16 suivant une direction parallèle. Des ouvertures 38 allongées à la base de la face du gousset 1 sont rectangulaires et se prolongent par un arrondi en demi-cercle 38a contigüe au côté du rebord en triangle 15, 16. Les ouvertures 38 fournissent un contour régulier en limite du côté du rebord 15, 16 triangulaire. Les bords 5, 6 extérieurs et les bords 10, 11 intérieurs accostant les deux zones rectilignes des ailes 2, 3 sont disposés dans des plans parallèles entre eux et sont orientés à 90 degrés. Les goussets 1 comprennent des ailes 2, 3 rigoureusement symétriques suivant l'axe 4 médian faisant un angle de 45 degrés par rapport au bord 5 et 6 extérieur. L'ouverture 38 permettant le passage d'une tige permettant le pivotement du dossier, (visible figure 2) est parfaitement symétrique par rapport à l'axe 4 médian. De ce fait, le gousset 1 est standard et peut être monté indifféremment sur le profil des coudes à angle droit, du côté droit ou gauche de la tubulure 21 du dossier 19, 20 (visible figure 2) des sièges, il suffit de tourner le gousset 1 d'un quart de tour selon le cas.

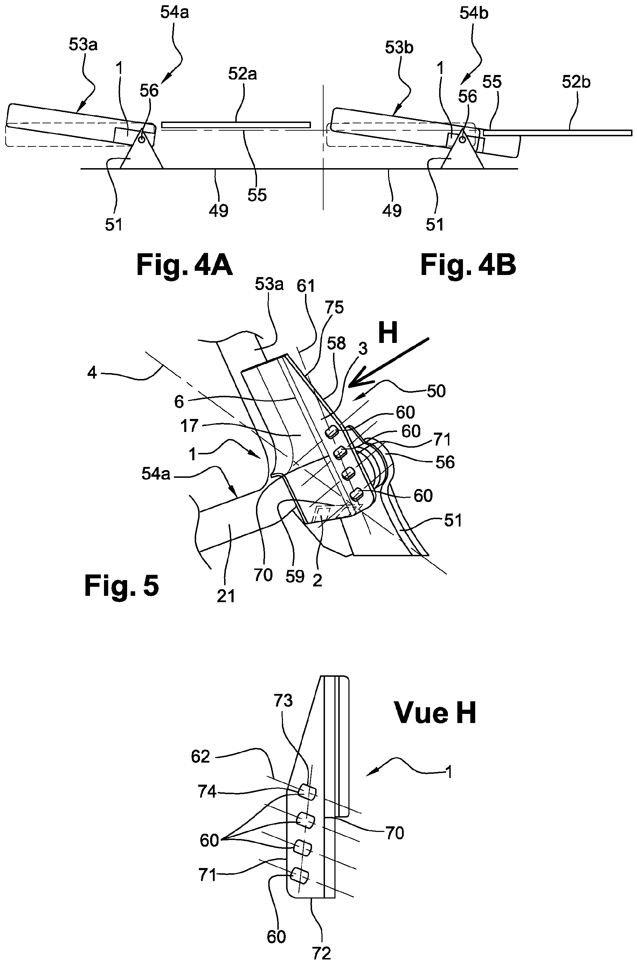

Les figures 4A-4B et 5 présentent une variante du gousset 1, dans une configuration où le gousset 1 monté sur un dossier de siège et sur un bras de fixation sur une structure de base, par l'intermédiaire d'une liaison pivot est apte à s'adapter à différents niveaux de plancher de véhicule. À cet effet, certains repères ont été changés pour une meilleure compréhension.

Les figures 4A-4B sont des vues schématiques couplées de profil d'une configuration de plancher 52a, 52b de niveau différents alignés avec le dossier 53a, 53b d'un siège 54a, 54b au moyen des goussets 1 multi positions, afin de former un plancher continument plat, suivant l'invention. Suivant les figures 4A-4B, les sièges sont fixés sur une structure de base 49 de niveau identique sur lesquelles sont solidarisés les bras 51 sur lesquelles sont montés les axes 56 permettant de fournir des liaisons pivots. Les planchers 52a, 52b sont à des niveaux distincts comme le montre la ligne de niveau 55 commune aux deux figures 4A-4B, et correspondent à des véhicules possédant des silhouettes différentes. En vue d'augmenter l'espace de chargement dans le coffre des véhicules concernés, les dossiers 53a, 53b des sièges 54a, 54b peuvent être rabattus à l'horizontale sur leurs assises, et s'aligner parfaitement avec les planchers 52a et 52b. On comprend aussi bien que sur le plan pratique que sur le plan de la qualité perçue les surfaces arrières dossiers 53a, 53b des sièges 54a, 54b doivent être disposés dans le prolongement des planchers 52a, 52b du véhicule, afin de constituer un plancher 52a, 52b rigoureusement plat.

La figure 5 est une vue partielle en perspective d'un gousset 1 multi position fixé sur la structure d'un dossier 53a, 53b de siège 54a, 54b et sur un bras 51 par l'intermédiaire d'un axe 56 fournissant une liaison pivot, suivant l'invention. Le gousset 1 est conçu suivant la description effectuée suivant les figures 1 à 3. Seul les rebords 58, 59 sont différents afin d'accueillir plusieurs ouvertures 60 disposées sur un axe 61 parallèle à la surface plane 17 du gousset 1. Les ailes 2, 3 possédants des rebords 58, 59 ont une forme générale trapézoïdale dont le plus long côté 70 est raccordé à angle droit sur la surface plane 17. Un autre côté plus court 71 est parallèle à ce premier côté, depuis l'extrémité des rebords 58, 59 formant un angle droit entre eux. Le côté d'extrémité 72 forme un angle droit avec les côtés court 71 et long 70. Le côté court 71 se prolonge à l'autre extrémité par un côté 75 en biseau pour rejoindre l'extrémité du côté long 70 pour former une zone triangulaire. La zone du rebord 57,58 encadrée par les côtés parallèles comporte la série d'ouvertures 60 réparties sur l'axe 61 permettant de fixer les liaisons pivots 56 articulés sur le bras 51 solidaire de la structure de base 49 du véhicule. La vue H est une vue de profil suivant la flèche H de la figure 5. Comme montré sur la vue, les ailes 2,3 comprennent une succession d'ouvertures 60 de forme oblongue dont les axes transversaux 62 sont inclinés à l'identique par rapport au côté d'extrémité 72 formant un angle droit avec les côtés court 71 et long 70. Les ouvertures 60 oblongues possèdent deux côtés munis de méplats 73 fermés par des rayons de courbure 74. La liaison pivot est équipée d'un axe (non visible) ayant un profil correspondant aux ouvertures 60 oblongues, ce qui garantit un emmanchement sûr sans risque de rotation de l'axe dans l'ouverture 60. La fixation peut être assurée par un cordon de soudure réalisé sur l'extrémité de l'axe et le bord de l'ouverture 60. En variante, l'axe pourrait être muni d'un système vis écrou, une collerette associée à l'axe étant en appui sur l'autre face du rebord. La collerette elle-même se prolongeant par un embout cylindrique muni de méplats, apte à venir se loger dans une ouverture cylindrique du bras prévue à cet effet. Le gousset 1 est représenté avec deux ailes 2, 3.

## Revendications

1. Gousset (1) d'articulation comprenant au moins deux ailes (2, 3), propres à être solidarisées sur les coudes formant les angles inférieurs d'une structure tubulaire (21) de dossier (19, 20) de siège de véhicule, au moins deux des ailes (2,3) du gousset (1) comportant chacune une série d'ouvertures (60), une des ouvertures (60) étant sélectionnable pour recevoir un axe de pivotement (56), afin de créer un plancher plat (52a, 52b), lorsque le dossier du siège (53a, 53b) est rabattu dans une position horizontale, **caractérisé en ce que** les ouvertures (60) des ailes (2, 3) sont oblongues, et **en ce que** le gousset comporte un axe (4) de symétrie médian passant par l'intersection des bords extérieurs (5, 6) des ailes (2, 3) formant un angle droit.

2. Gousset (1) selon la revendication 1, **caractérisé en ce que** les ouvertures (60) sont réalisées dans la zone de l'aile (2, 3) possédant des cotés parallèles.

3. Gousset (1) selon l'une quelconque des revendications 1 à 2, **caractérisé en ce que** la série d'ouvertures (60) est alignée sur une ligne commune d'une aile (2, 3).

4. Gousset (1) selon l'une quelconque des revendications 1 à 3, **caractérisée en ce que** l'aile (2, 3) comporte au moins une série de deux ouvertures (60).

5. Dossier de siège (53a, 54b) de véhicule, **caractérisé en ce qu'**il comporte au moins deux goussets (1), selon les revendications 1 à 4.

## Patentansprüche

1. Gelenkzapfen (1) mit mindestens zwei Flügeln (2, 3), die an den unteren Ecken einer rohrförmigen Struktur (21) einer Rückenlehne (19, 20) eines Fahrzeugsitzes befestigt werden können, wobei mindestens zwei der Flügel (2, 3) des Zapfens (1) eine Reihe von Öffnungen (60) aufweisen, wobei eine der Öffnungen (60) zur Aufnahme einer Schwenkachse (56) auswählbar ist, um einen flachen Boden (52a, 52b) zu schaffen, wenn die Rückenlehne des Sitzes (53a, 53b) in einer horizontalen Position abgeschlagen, **dadurch gekennzeichnet, dass** die Öffnungen (60) der Flügel (2, 3) länglich sind und dass die Knotenfläche eine Mittelsymmetrieachse (4) aufweist, die durch den Schnittpunkt der äußeren Ränder (5, 6) der Flügel (2, 3) verläuft und einen rechten Winkel bildet.

2. Zwickel (1) nach Anspruch 1, **dadurch gekennzeichnet, dass** die Öffnungen (60) im Bereich des Flügels (2, 3) mit parallelen Seiten ausgebildet sind.

3. Zwickel (1) nach einem der Ansprüche 1 bis 2, **dadurch gekennzeichnet, dass** die Reihe von Öffnungen (60) auf eine gemeinsame Linie eines Flügels (2, 3) ausgerichtet ist.

4. Zwickel (1) nach einem der Ansprüche 1 bis 3, **dadurch gekennzeichnet, dass** der Flügel (2, 3) mindestens eine Reihe von zwei Öffnungen (60) aufweist.

5. Rückenlehne (53a, 54b) eines Fahrzeugsitzes, **dadurch gekennzeichnet, dass** sie mindestens zwei Zwickel (1) nach den Ansprüchen 1 bis 4 aufweist.

## Claims

1. Jointing neck (1) comprising at least two wings (2,3) suitable for being bonded to the elbows forming the lower corners of a tubular (21) back structure (19,20) of the vehicle seat, at least two wings (2,3) of the base (1) comprising a series of openings (60), one of the selectable openings (60) to receive a pivot axis (56), in order to create a flat floor (52a, 52b), when the seat back (53a, 53b) is folded into a horizontal position, **characterized by** the apertures (60) of the wings (2,3) being oblong, and by the base having an axis (4) of median symmetry passing through the intersection of the outer edges (5,6) of the wings (2,3) forming a right angle.

2. Gusset (1) according to claim 1, characterized as openings (60) are made in the wing area (2, 3) with parallel sides.

3. Gusset (1) according to any of the claims 1 to 2, characterized as the series of openings (60) is aligned with a common wing line (2, 3).

4. Gusset (1) according to any of the claims 1 to 3, characterized as the wing (2, 3) has at least two openings (60).

5. Vehicle seat back (53a, 54b), **characterized by** having at least two pods (1), as required by claims 1 to 4.
